# FASCICULE DE BREVET EUROPEEN

(11) **EP 1 566 608 B1**
(45) Date de publication et mention de la délivrance du brevet: **11.04.2012**
(21) Numéro de dépôt: 05290330.9
(22) Date de dépôt: 15.02.2005
(51) Int. Cl.: B60R 21/264, F42B 3/04

(54) **Générateur de gaz pyrotechnique adaptatif multi-étages**
Anpassbarer mehrstufiger pyrotechnischer Gasgenerator
Adaptable multistage pyrotechnical gas generator

(30) Priorité: 18.02.2004 FR 0401604
(43) Date de publication de la demande: 24.08.2005
(73) Titulaire: SNPE Matériaux Energétiques, 75004 Paris (FR)
(72) Inventeur: Cristoforetti, Fabien, 65140 Montfaucon (FR)
(74) Mandataire: Joly, Jean-Jacques

(56) Documents cités:
- DE-C- 2 301 881
- DE-U- 20 112 546
- DE-U- 29 801 477
- FR-A- 1 068 300
- FR-A1- 2 321 600
- FR-A1- 2 742 483
- US-A- 4 308 721

## Description

### Arrière-plan de l'invention

L'invention concerne les générateurs de gaz pyrotechniques adaptatifs multi-étages, capables de délivrer un débit de gaz modulable en fonction d'une séquence d'allumage de différentes parties de chargement de propergol.

De tels générateurs de gaz sont notamment utilisables pour l'actionnement de systèmes de retenue dans une automobile ou pour la dispersion d'agents d'extinction.

Il existe dans de nombreux cas un besoin d'adaptation du débit de gaz produit en fonction de circonstances particulières existant à l'instant où un générateur de gaz doit être allumé.

A cet effet, il est connu de réaliser des générateurs de gaz comprenant plusieurs chargements disposés dans différentes chambres et associés à des organes initiateurs distincts. Les chargements sont conçus pour produire des débits de gaz différents en utilisant des chargements de natures différentes ou de caractéristiques géométriques différentes. On pourra se référer en particulier aux documents EP 0 733 519 ou US 5 664 802.

La réalisation des différents composants nécessaires pour réaliser de tels générateurs de gaz adaptatifs connus, ainsi que l'assemblage de ces composants ont un impact significatif sur les coûts.

Un chargement à géométrie cylindrique avec plusieurs segments répartis autour de l'axe et reliés par des parties de moindre section est décrit dans le document FR 2 742 483 pour un générateur birégime (débit de gaz élevé suivi d'un débit plus faible). Le document FR 1 068 300 montre aussi un chargement à géométrie cylindrique mais conçu pour réduire la progressivité de la combustion.

### Objet et résumé de l'invention

L'invention a pour but de proposer un générateur de gaz adaptatif ayant une structure simplifiée permettant de réduire les coûts à la fois de réalisation des différents éléments qui le constituent et d'assemblage de ces éléments.

Ce but est atteint grâce à un générateur de gaz adaptatif comprenant :
- un bloc de propergol monolithique comportant plusieurs segments de génération de gaz séparés et reliés par des parties tampons,
- un corps renfermant le bloc de propergol et délimitant plusieurs chambres de combustion contenant chacune un segment de génération de gaz, les chambres de combustion étant isolées les unes des autres dans le corps au niveau des parties tampons et étant munies chacune d'au moins un orifice de sortie de gaz, et
- plusieurs organes d'allumage associés respectivement aux chambres de combustion.

L'invention est remarquable notamment en ce que la possibilité de moduler le débit de gaz produit est obtenue avec un bloc de propergol unique qui peut être réalisée en une seule opération.

Avantageusement, le bloc de propergol comporte au moins deux segments de génération de gaz ayant des caractéristiques géométriques différentes de manière à produire des débits de gaz différents.

Avantageusement encore, les parties tampons sont de section réduite par rapport aux segments de génération de gaz qu'elles séparent.

Le bloc de propergol peut être sous forme d'un profilé de section constante aisément réalisable.

Les différentes parties du bloc de propergol peuvent être disposées en lignes droites, c'est-à-dire avec des segments de génération de gaz ayant des axes parallèles situés dans un même plan, ou être disposées suivant une courbe, par exemple avec des segments de génération de gaz ayant des axes parallèles situés sur une même surface cylindrique.

Selon une particularité du générateur de gaz conforme à l'invention, le corps délimitant les chambres de combustion comprend des parties de cloisons internes qui coopèrent avec les parties tampons du bloc de propergol pour isoler les chambres de combustion les unes des autres.

Selon une autre particularité, les orifices de sortie sont obturés par des opercules d'étanchéité capables de s'ouvrir sous l'effet de la pression dans les chambres de combustion.

Chaque chambre de combustion peut comporter au moins un ensemble de filtration et refroidissement de gaz.

Dans un mode particulier de réalisation, les orifices de sortie d'au moins plusieurs chambres de combustion communiquent avec une chambre commune de diffusion de gaz. Cette dernière peut comprendre au moins un ensemble de filtration et refroidissement de gaz.

### Brève description des dessins

L'invention sera mieux comprise à la lecture de la description faite ci-après, à titre indicatif mais non limitatif, en référence aux dessins annexés sur lesquels :
- la figure 1 est une vue en perspective montrant un mode de réalisation d'un bloc de propergol monolithique pour générateur de gaz adaptatif selon un mode de réalisation de l'invention ;
- la figure 2 est une vue en coupe selon le plan II-II de la figure 3 d'un générateur de gaz adaptatif utilisant le bloc de propergol de la figure 1 ;
- la figure 3 est une vue en perspective et la coupe selon le plan III-III de la figure 2 ;
- la figure 4 est une vue en coupe transversale selon le plan IV-IV de la figure 2 ;
- la figure 5 est une vue en perspective et en coupe transversale selon le plan V-V de la figure 2 ;
- la figure 6 est une vue en coupe transversale d'une variante de réalisation d'un générateur de gaz adaptatif utilisant le bloc de propergol de la figure 1 ;
- la figure 7 est une vue partielle en coupe longitudinale selon le plan VII-VII de la figure 6 ;
- la figure 8 est une vue en perspective d'un bloc de propergol monolithique pour générateur de gaz adaptatif selon un autre mode de réalisation de l'invention ;
- la figure 9 est une vue en coupe radiale selon le plan IX-IX de la figure 11 d'un générateur de gaz adaptatif utilisant le bloc de la figure 8 ;
- la figure 10 est une vue en perspective et en coupe selon le plan X-X de la figure 9 ; et
- la figure 11 est une vue en coupe selon le plan XI-XI de la figure 9.

### Description détaillée de modes de réalisation de l'invention

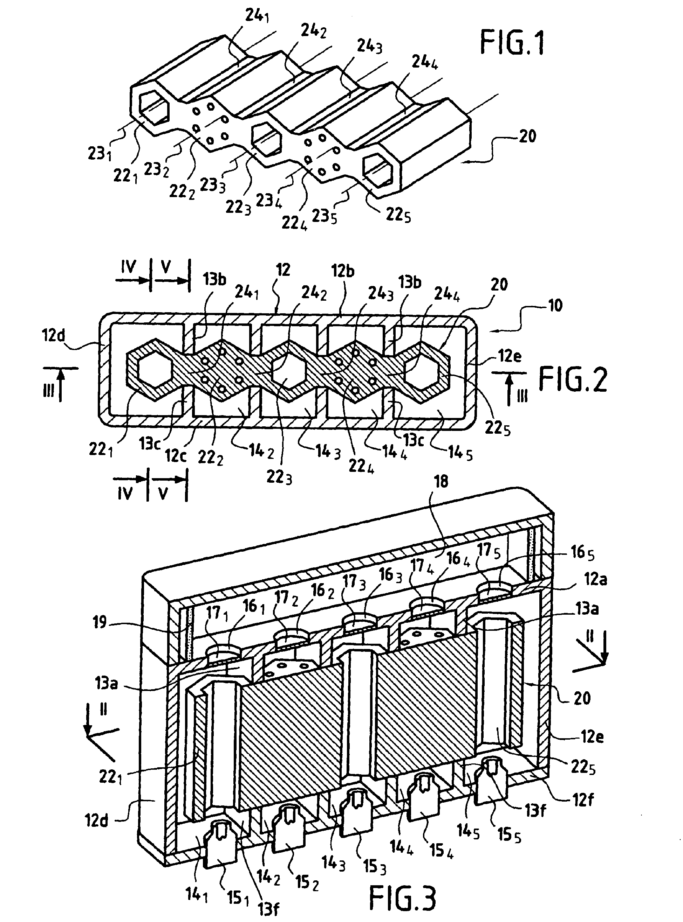

On se réfère d'abord aux figures 1 à 5 qui illustrent un premier mode de réalisation de l'invention.

Le générateur de gaz adaptatif 10 comprend un bloc de propergol monolithique 20 logé à l'intérieur d'un corps 12.

Le bloc de propergol 20 comprend une pluralité de segments de génération de gaz 22₁, 22₂, ... séparés les unes des autres et reliés les uns aux autres par des parties tampons 24₁, 24₂, ... Dans l'exemple illustré le nombre de segments est égal à 5. Ce nombre pourra bien entendu être différent, dès lors qu'il est au moins égal à 2.

Les segments de génération de gaz peuvent être d'un ou de plusieurs types différents capables de produire un ou plusieurs débits de gaz différents, la modulation de débit de gaz produit par le générateur multi-étages étant réalisée par allumage simultané ou séquentiel d'un ou plusieurs segments de génération de gaz sélectionnés.

Les segments de génération de gaz de différents types se distinguent les uns des autres par des caractéristiques géométriques différentes, notamment en conférant aux segments de génération de gaz des formes de profilés de longueurs et/ou profils différents.

Dans l'exemple illustré, les segments de génération de gaz sont de deux types différents l'un de l'autre par leurs profils : des segments 22₁, 22₃, 22₅ à canal central à section hexagonale et des segments 22₂, 22₄ à plusieurs canaux répartis autour de l'axe du segment. Dans le mode de réalisation des figures 1 à 5, les segments de génération de gaz et les parties tampons sont disposés en ligne, avec des axes 23₁ à 23₅ des segments de génération de gaz situés dans un même plan.

Le bloc de propergol 20 a avantageusement une forme générale d'un profilé avec des parties tampons 24₁ à 24₄ ayant une section, par exemple rectangulaire, de dimension réduite par rapport aux sections des parties de génération de gaz qu'elles séparent et relient.

Le bloc de propergol 20 peut être réalisé en un matériau connu de génération de gaz tel que matériau nitro-cellulosique ou matériau composite avec une charge et un liant. Il est produit par toute technique connue telle que pressage, moulage, coulée ou extrusion.

Le corps 12, réalisé par exemple en matériau métallique ou plastique, est de forme générale parallélépipédique avec une première partie formant réceptacle ayant une paroi de fond 12a, des parois latérales 12b, 12c et des parois d'extrémités 12d, 12e, et une deuxième partie formant couvercle ayant une paroi 12f opposée à la paroi 12a.

Le corps 12 délimite une pluralité de chambres de combustion 14₁, 14₂, ..., 14₅ en nombre égal à celui des segments de génération de gaz, chaque chambre de combustion contenant un tel segment.

Les chambres de combustion sont isolées les unes des autres dans le corps 12 au niveau des parties tampons du bloc de propergol 20 pour éviter que la combustion dans une chambre se propage à une chambre voisine avant consommation du segment de génération de gaz et de la partie tampon.

Dans le mode de réalisation illustré, l'isolation des chambres de combustion les unes par rapport aux autres est réalisée par des parties de cloisons internes qui coopèrent avec les parties tampons 24₁, 24₂, ..., les parties de cloisons internes peuvent être constituées par des nervures faisant partie intégrante du corps 12 et dont les bords libres coopèrent avec les faces libres longitudinales et d'extrémité des parties tampons pour réaliser l'étanchéité entre les chambres de combustion dans le corps 12 et maintenir en outre le bloc de propergol 20 dans le corps 12.

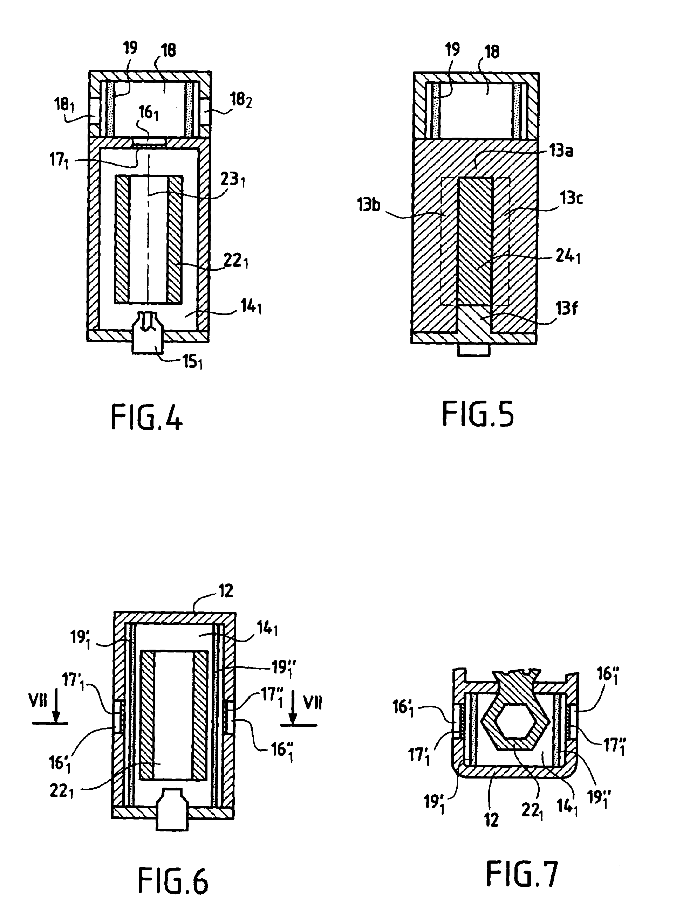

Ainsi, des nervures 13b, 13c faisant saillie sur les faces internes opposées des parois latérales 12b, 12c du corps 12 et s'étendant sur toute la longueur de ces parois coopèrent avec les faces libres longitudinales des parties tampons du bloc 20. Des nervures 13a faisant saillie à la face interne de la paroi 12a du corps 12 coopèrent avec une des faces libres d'extrémité des parties tampons du bloc 20, tandis que des nervures 13f faisant saillie à la face interne de la paroi d'extrémité 12f du corps 12 coopèrent avec l'autre face libre d'extrémité des parties tampons du bloc 20. Les nervures 13b et 13c se raccordent aux nervures 13a (figure 5).

Pour son montage, le bloc 20 est inséré dans le réceptacle formé par la paroi 12a, les parois latérales 12b, 12c et les parois d'extrémité 12d, 12e du corps 12, en étant guidé par les parties de cloison 13b, 13c et jusqu'à venir en butée sur les parties de cloison 13a. Ensuite, la paroi d'extrémité 12f du bloc est mise en place jusqu'à ce que les nervures 13f viennent en butée contre le bloc 20, puis la paroi d'extrémité 12f est reliée au reste du corps 12 par exemple par vissage (non représenté).

La fabrication du bloc de propergol 20 avec plusieurs parties de génération de gaz séparées et son montage dans le corps 12 pour définir plusieurs chambres de combustion isolées les unes des autres sont donc particulièrement aisés et ne requièrent qu'un nombre limité de composants.

Des garnitures d'étanchéité, par exemple en élastomère, silicone ou caoutchouc peuvent être interposées entre les faces des parties tampons et les extrémités des parties de cloisons 13 pour bien assurer l'étanchéité entre chambres de combustion dans le corps 12.

En outre, les faces libres des parties tampons pourront être revêtues d'un film de produit inhibant la combustion, par exemple en résine époxy ou élastomère, à titre de sécurité supplémentaire vis-à-vis de la transmission prématurée de la combustion d'une chambre de combustion à une autre voisine.

La paroi d'extrémité 12f du bloc 12 supporte en outre des organes d'allumage ou initiateurs 15₁, 15₂, ..., 15₅ logés chacun dans une chambre de combustion respective. Les organes d'allumage peuvent être de type électropyrotechnique bien connu en soi. Ils sont reliés à un boîtier de commande par des câbles (non représentés).

Chaque chambre de combustion 14₁, 14₂, ..., 14₅ comporte au moins un orifice de sortie de gaz 16₁, 16₂, ..., 16₅ qui le fait communiquer avec une chambre de diffusion commune à plusieurs chambres de combustion. Dans l'exemple illustré, une seule chambre de diffusion 18 est prévue commune à toutes les chambres de combustion, du côté de la paroi 12a du corps 12 dans laquelle sont formés les orifices de sortie de gaz. Chaque orifice de sortie 16₁, 16₂, ..., 16₅ peut être obturé par un opercule 17₁, 17₂, ..., 17₅ en matériau métallique ou plastique qui isole la chambre de combustion tant que le segment générateur de gaz qu'elle contient n'est pas allumé et qui, après allumage, se rompt sous l'effet de la pression des gaz dans la chambre. On évite ainsi un risque de propagation indésirable de la combustion d'une chambre de combustion à une autre via la chambre de diffusion 18.

Un ou plusieurs ensembles 19 de filtration et de refroidissement des gaz peuvent être disposés dans la chambre de diffusion afin de retenir des particules et abaisser la température des gaz avant que ceux-ci s'échappent de la chambre de diffusion vers un dispositif à actionner à travers un ou plusieurs orifices de sortie tels que 18₁, 18₂ (figure 4).

Le fonctionnement du générateur de gaz adaptatif multi-étages des figures 1 à 3 découle à l'évidence de ce qui précède.

En fonction de l'évolution souhaitée dans le temps de la valeur du débit de gaz de combustion, les instants d'allumage d'un ou plusieurs segments de génération de gaz 22₁, 22₂, ..., 22₅ sont déterminés et les organes d'allumage 15₁, 15₂, ..., 15₅ sont commandés en conséquence. Quelle que soit la séquence d'allumage choisie, l'intégralité du bloc de propergol est brûlée en fin de fonctionnement du générateur.

Les figures 6 et 7 illustrent une variante de réalisation d'un générateur de gaz utilisant le bloc de propergol de la figure 1. Ce générateur diffère de celui des figures 2 à 5 en ce que chaque chambre de combustion comprend en outre un ou plusieurs ensembles 19' de filtration et de refroidissement de gaz logé dans la chambre entre le segment de génération de gaz et le ou chaque orifice de sortie de gaz hors de la chambre.

Dans l'exemple illustré, chaque chambre de combustion telle que 14₁ comprend deux orifices de sortie 16'₁ et 16"₁ formés dans deux côtés opposés de la paroi latérale du corps 12 et muni chacun d'un opercule d'obturation 17'₁, 17"₁ susceptible de rompre sous l'effet de la pression dans la chambre de combustion. Des ensembles de filtration et de refroidissement de gaz 19'₁, 19"₁ sont disposés dans la chambre de combustion entre le segment de génération de gaz 22₁ et, respectivement, les orifices 16'₁, 16"₁.

Bien entendu, on pourra prévoir un seul orifice de sortie de gaz, ou plus de deux orifices, pour chaque chambre de combustion.

En outre, le gaz issu des orifices de sortie de gaz pourra être introduit dans une chambre de diffusion (non représentée) avant injection dans un dispositif utilisateur.

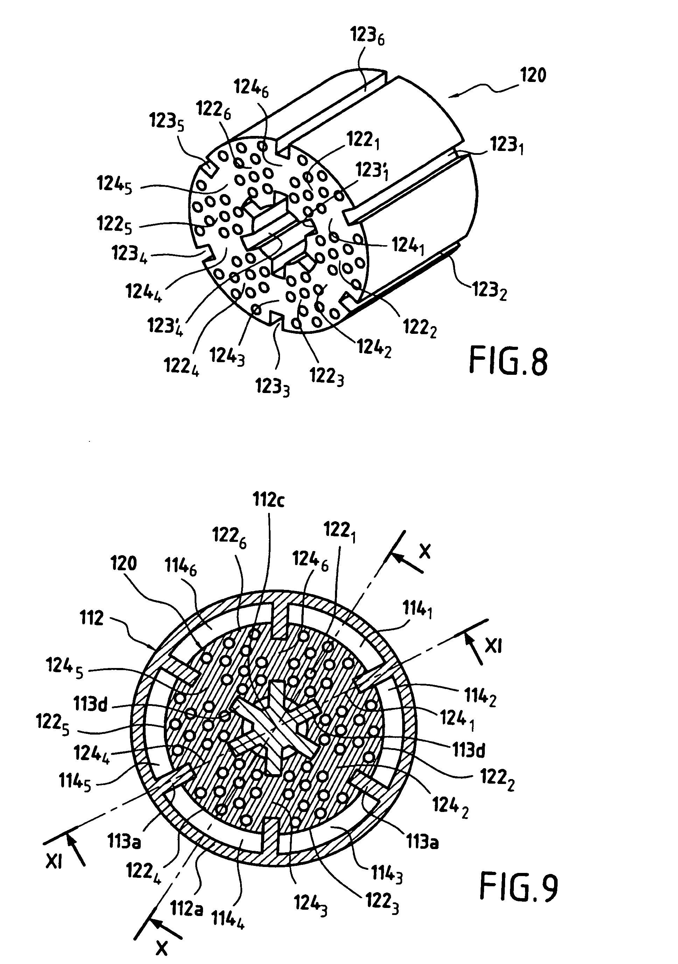

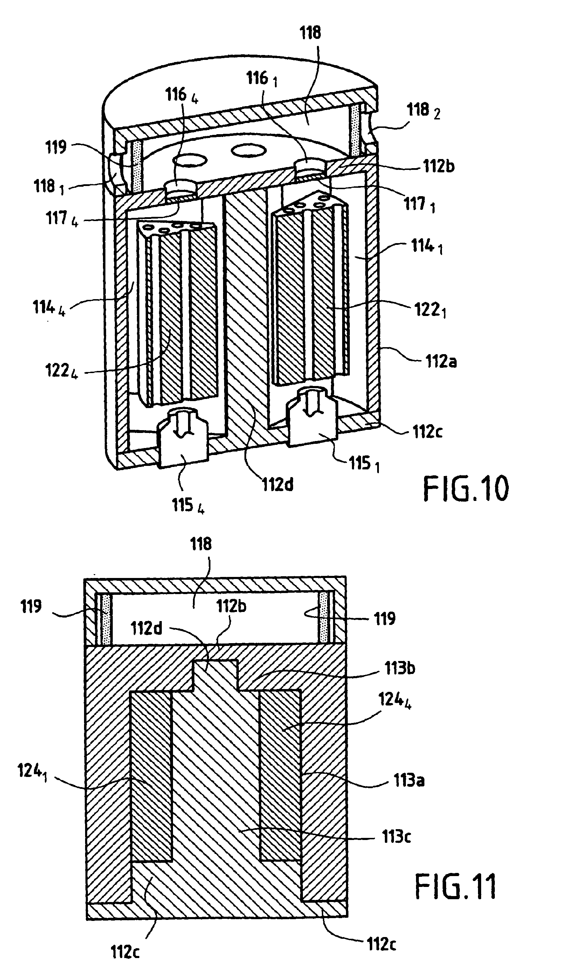

Les figures 8 à 11 illustrent un deuxième mode de réalisation d'un générateur de gaz adaptatif multi-étages selon l'invention.

Le générateur de gaz 110 comprend un bloc de propergol monolithique 120 logé à l'intérieur d'un corps 112.

Le bloc de propergol 120 comprend une pluralité de segments de génération de gaz séparés les uns des autres et reliés les uns aux autres par des parties tampons. Le bloc 120 se distingue notamment du bloc 20 de la figure 1 en ce que les segments de génération de gaz ont la forme de profilés dont les axes sont situés non pas dans un plan, mais sur une même surface cylindrique, en l'espèce une surface cylindrique à section circulaire. Il doit être noté que les axes des segments de génération de gaz pourraient être disposés sur une même surface cylindrique à section non circulaire.

Dans l'exemple illustré, le nombre de segments générateurs de gaz est égal à six : 122₁, 122₂, ..., 122₆, de même que le nombre de parties tampons 124₁, 124₂, ..., 124₆.

Toujours dans l'exemple illustré, les segments générateurs de gaz sont de même type, à savoir avec un profil multi-canaux, la modulation du débit de gaz émis par le générateur étant réalisée par sélection du nombre de segments générateurs de gaz allumés dans le même temps. On pourra bien entendu réaliser le bloc 120 avec des segments générateurs de gaz de types différents, notamment de profils différents, comme dans le cas du bloc 20.

Le bloc de propergol 120 se présente sous la forme d'un profilé à section de forme générale annulaire réalisable par pressage, moulage, coulée ou extension. Des rainures radiales telles que 123₁ et 123'₁ sont formées dans les faces périphériques externe et interne du bloc 120 pour définir des parties tampons de section réduite par rapport à celle des segments de génération de gaz qu'elles séparent et relient.

Le corps 112 réalisé par exemple en matériau métallique ou plastique, a une forme générale cylindrique. Il comporte une partie formant réceptacle avec la paroi latérale cylindrique 112a du corps et une paroi d'extrémité 112b et une partie d'extrémité 112c opposée à la paroi 112b et portant dans sa partie centrale un noyau 112d faisant saillie à la face interne de la paroi 112c.

Le corps 112 délimite une pluralité de chambres de combustion 114₁, 114₂, ...., 114₆ en nombre égal à celui des segments de génération de gaz, chacun de ceux-ci étant logé dans une chambre de combustion respective. Les chambres de combustion sont isolées les unes des autres dans le corps 112 au niveau des parties tampons du bloc de propergol 120. Dans l'exemple illustré, cette isolation est réalisée par des parties de cloisons internes qui coopèrent avec les parties tampons du bloc 120.

Les parties de cloisons internes peuvent être constituées par des nervures faisant partie intégrante du corps 112 et dont les bords libres coopèrent avec les parties libres longitudinales et d'extrémité des parties tampons pour réaliser l'étanchéité entre les chambres de combustion dans le corps 112 et maintenir en place le bloc de propergol 120.

Ainsi, des nervures 113a faisant saillie radialement à la face interne de la paroi latérale périphérique du corps 112 et s'étendant sur toute la longueur du corps 112 coopèrent avec les faces libres longitudinales extérieures des parties tampons du bloc de propergol en pénétrant dans les rainures radiales, telles que 123₁, jusqu'au fond de celles-ci. Des nervures 113d faisant saillie radialement à la périphérie du noyau 112d coopèrent avec les faces libres longitudinales internes des parties tampons du bloc de propergol en pénétrant dans les rainures radiales, telles que 123'₁, jusqu'au fond et tout le long de celles-ci. Des nervures 113b faisant saillie à la face interne de la paroi d'extrémité 112b du corps 112 coopèrent avec une des faces libres d'extrémité du bloc 120, au niveau des parties tampons, tandis que des nervures 113c faisant saillie à la face interne de la paroi d'extrémité 112c du corps 112 coopèrent avec l'autre face libre d'extrémité du bloc 120, au niveau des parties tampons. On note que les nervures 113a, 113b se raccordent entre elles, de même que les nervures 113c, 113d.

Des garnitures d'étanchéité peuvent être insérées entre les faces en regard des parties tampons du bloc 120 et des parties de cloisons internes du corps 112. En outre, les faces libres des parties tampons du bloc 120 peuvent être revêtues d'un film de produit inhibant la combustion.

Pour son montage, le bloc 120 est inséré dans le réceptacle formé par la paroi latérale 112a et la paroi d'extrémité 112b du corps 112, en étant guidé par les nervures 113a et jusqu'à venir en appui sur les nervures 113b. Ensuite, la paroi d'extrémité 112c est mise en place, avec guidage des nervures 113d du noyau 112d le long des rainures formées à la paroi périphérique interne du bloc 120, puis la paroi d'extrémité 112c est fixée à la paroi latérale 112a du corps 112.

La paroi d'extrémité 112c du corps 112 supporte des organes d'allumage, ou initiateurs, tels que 115₁ et 115₄, qui sont logés chacun dans une chambre de combustion respective et sont reliés à un boîtier de commande (non représenté).

Chaque chambre de combustion comporte au moins un orifice de sortie de gaz, tel que 116₁, 116₄, qui la fait communiquer avec une chambre de diffusion commune à plusieurs chambres de combustion. Dans l'exemple illustré, les orifices de sortie de gaz sont formés dans la paroi 112b du corps 112 et la chambre de diffusion 118 est située du côté de cette paroi et est commune à toutes les chambres de combustion. Les orifices de sortie tels que 116₁, 116₄ sont munis d'opercules d'obturation, tels que 117₁, 117₄, susceptibles de se rompre sous l'effet des gaz produits dans la chambre de combustion.

Un ou plusieurs ensembles 119 de filtration et de refroidissement de gaz sont logés dans la chambre de diffusion 118 en amont d'un ou plusieurs orifices 118₁, 118₂ de sortie du gaz hors de celle-ci.

On retrouve, dans ce deuxième mode de réalisation, les mêmes avantages que dans le premier, à savoir un nombre réduit de composants et la facilité de montage de ceux-ci, différentes possibilités offertes de modulation du débit de gaz produit avec un bloc de propergol unique, et la combustion complète du bloc quelle que soit la séquence d'allumage choisie, le générateur devenant inerte à l'issue de son fonctionnement.

## Revendications

1. Générateur de gaz pyrotechnique multi-étages capable de produire un débit de gaz variable, générateur comprenant:
- un bloc de propergol monolithique (20;120) comportant plusieurs segments de génération de gaz (22;122) séparés et reliés par des parties tampons (24;124),
- un corps (12;112) renfermant le bloc de propergol et délimitant plusieurs chambres de combustion (14;114) contenant chacune un segment de génération de gaz, les chambres de combustion étant isolées les unes des autres dans le corps au niveau des parties tampons, **caractérisé en ce qu'**il comprend
- plusieurs organes d'allumage (15;115) associés respectivement aux chambres de combustion, les chambres de combustion étant munies chacune d'au moins un orifice de sortie de gaz (16;116), le débit de gaz étant variable en fonction d'une séquence d'allumage de différentes parties du chargement de propergol.

2. Générateur de gaz selon la revendication 1, **caractérisé en ce que** le bloc de propergol (20;120) comporte au moins deux segments de génération de gaz ayant des caractéristiques géométriques différentes de manière à produire des débits de gaz différents.

3. Générateur de gaz selon la revendication 2, **caractérisé en ce que** le bloc de propergol (20;120) comporte au moins deux segments de génération de gaz de profils différents.

4. Générateur de gaz selon l'une quelconque des revendications 1 à 3, **caractérisé en ce que** les parties tampons (24;124) sont de section réduite par rapport aux segments de génération de gaz (22;122) qu'elles séparent.

5. Générateur de gaz selon l'une quelconque des revendications 1 à 4, **caractérisé en ce que** le bloc (20;120) est sous forme d'un profilé de section constante.

6. Générateur de gaz selon l'une quelconque des revendications 1 à 5, **caractérisé en ce que** les segments de génération de gaz (22) ont des axes parallèles situés dans un même plan.

7. Générateur de gaz selon l'une quelconque des revendications 1 à 5, **caractérisé en ce que** les segments de génération de gaz (122) ont des axes parallèles situés sur une même surface cylindrique.

8. Générateur de gaz selon l'une quelconque des revendications 1 à 7, **caractérisé en ce que** le corps (12;112) comprend des parties de cloisons internes (13; 113) qui coopèrent avec les parties tampons (24;124) du bloc de propergol pour isoler les chambres de combustion (14;114) les unes des autres.

9. Générateur de gaz selon l'une quelconque des revendications 1 à 8, **caractérisé en ce que** les orifices de sortie (16;116) sont obturés par des opercules d'étanchéité (17;117) capables de s'ouvrir sous l'effet de la pression dans les chambres de combustion.

10. Générateur de gaz selon l'une quelconque des revendications 1 à 9, **caractérisé en ce que** chaque chambre de combustion (14) comporte au moins un ensemble (19') de filtration et refroidissement de gaz.

11. Générateur de gaz selon l'une quelconque des revendications 1 à 9, **caractérisé en ce que** les orifices de sortie d'au moins plusieurs chambres de combustion (14;114) communiquent avec une chambre commune de diffusion de gaz (18;118).

12. Générateur de gaz selon la revendication 11, **caractérisé en ce que** la chambre de diffusion de gaz (18;118) comprend au moins un ensemble (19:119) de filtration et refroidissement de gaz.

## Claims

1. A multistage pyrotechnic gas generator capable of producing a variable gas flow rate, the generator comprising:
· a monolithic propellant block (20; 120) comprising a plurality of gas-generation segments (22; 122) that are separate and connected together by buffer portions (24; 124); and
· a body (12; 112) containing the propellant block and defining a plurality of combustion chambers (14; 114), each containing a gas-generation segment, the combustion chambers being isolated from one another in the body by the buffer portions;
the generator being **characterized in that** it comprises:
· a plurality of ignition members (15; 115) associated respectively with the combustion chambers, each of the combustion chambers being provided with at least one gas outlet orifice (16; 116), and the gas flow rate being variable as a function of an ignition sequence for various portions of the propellant charge.

2. A gas generator according to claim 1, **characterized in that** the propellant block (20; 120) includes at least two gas-generation segments having geometrical characteristics that are different so as to produce different gas flow rates.

3. A gas generator according to claim 2, **characterized in that** the propellant block (20; 120) includes at least two gas-generation segments of different profiles.

4. A gas generator according to any one of claims 1 to 3, **characterized in that** the buffer portions (24; 124) are of section that is reduced compared with the gas-generation segments (22; 122) that they separate.

5. A gas generator according to any one of claims 1 to 4, **characterized in that** the block (20; 120) is in the form of a section member of constant section.

6. A gas generator according to any one of claims 1 to 5, **characterized in that** the gas-generation segments (22) have parallel axes situated in a common plane.

7. A gas generator according to any one of claims 1 to 5, **characterized in that** the gas-generation segments (122) have parallel axes situated on a common cylindrical surface.

8. A gas generator according to any one of claims 1 to 7, **characterized in that** the body (12; 112) comprises internal partition portions (13; 113) that co-operate with the buffer portions (24; 124) of the propellant block to isolate the combustion chambers (14; 114) from one another.

9. A gas generator according to any one of claims 1 to 8, **characterized in that** the outlet orifices (16; 116) are closed by sealing capsules (17; 117) capable of opening under the effect of pressure in the combustion chambers.

10. A gas generator according to any one of claims 1 to 9, **characterized in that** each combustion chamber (14) includes at least one gas filtering and cooling assembly (19') .

11. A gas generator according to any one of claims 1 to 9, **characterized in that** the outlet orifices from at least a plurality of combustion chambers (14; 114) communicate with a common gas-diffusion chamber (18; 118).

12. A gas generator according to claim 11, **characterized in that** the gas-diffusion chamber (18; 118) comprises at least one gas filtering and cooling assembly (19; 119).

## Patentansprüche

1. Mehrstufiger pyrotechnischer Gasgenerator, der geeignet ist, eine veränderliche Gasmenge zu liefern, Generator umfassend:
- einen monolithischen Treibstoffblock (20; 120), der mehrere getrennte und durch Pufferteile (24; 124) verbundene Gaserzeugungssegmente (22; 122) umfaßt,
- einen Körper (12; 112), der den Treibstoffblock enthält und mehrere Brennkammern (14; 114) begrenzt, die jeweils ein Gaserzeugungssegment enthalten, wobei die Brennkammern in dem Körper im Bereich der Pufferteile voneinander getrennt sind,
**dadurch gekennzeichnet, daß** er umfaßt:
- mehrere Zündorgane (15; 115), die jeweils den Brennkammern zugeordnet sind, wobei die Brennkammern jeweils mit wenigstens einer Gasaustrittsöffnung (16; 116) versehen sind, wobei die Gasmenge in Abhängigkeit einer Zündfolge von unterschiedlichen Teilen der Treibstoffladung veränderlich ist.

2. Gasgenerator nach Anspruch 1, **dadurch gekennzeichnet, daß** der Treibstoffblock (20; 120) wenigstens zwei Gaserzeugungssegmente umfaßt, die unterschiedliche geometrische Eigenschaften aufweisen, so daß sie unterschiedliche Gasmengen erzeugen.

3. Gasgenerator nach Anspruch 2, **dadurch gekennzeichnet, daß** der Treibstoffblock (20; 120) wenigstens zwei Gaserzeugungssegmente mit unterschiedlichen Profilen umfaßt.

4. Gasgenerator nach einem der Ansprüche 1 bis 3, **dadurch gekennzeichnet, daß** die Pufferteile (24; 124) im Vergleich zu den Gaserzeugungssegmenten (22; 122), die sie trennen, einen reduzierten Querschnitt aufweisen.

5. Gasgenerator nach einem der Ansprüche 1 bis 4, **dadurch gekennzeichnet, daß** der Block (20; 120) in Form eines Profils mit konstantem Querschnitt vorliegt.

6. Gasgenerator nach einem der Ansprüche 1 bis 5, **dadurch gekennzeichnet, daß** die Gaserzeugungssegmente (22) in einer gleichen Ebene gelegene parallele Achsen aufweisen.

7. Gasgenerator nach einem der Ansprüche 1 bis 5, **dadurch gekennzeichnet, daß** die Gaserzeugungssegmente (122) auf einer gleichen zylindrischen Fläche gelegene parallele Achsen aufweisen.

8. Gasgenerator nach einem der Ansprüche 1 bis 7, **dadurch gekennzeichnet, daß** der Körper (12; 112) innere Trennwandteile (13; 113) aufweist, die mit den Pufferteilen (24; 124) des Treibstoffblocks zusammenwirken, um die Brennkammern (14; 114) voneinander zu trennen.

9. Gasgenerator nach einem der Ansprüche 1 bis 8, **dadurch gekennzeichnet, daß** die Austrittsöffnungen (16; 116) durch Dichtungskappen (17; 117) verschlossen sind, die geeignet sind, sich unter der Wirkung des Druckes in den Brennkammern zu öffnen.

10. Gasgenerator nach einem der Ansprüche 1 bis 9, **dadurch gekennzeichnet, daß** jede Brennkammer (14) wenigstens eine Anordnung (19`) zum Filtern und Abkühlen von Gas umfaßt.

11. Gasgenerator nach einem der Ansprüche 1 bis 9, **dadurch gekennzeichnet, daß** die Austrittsöffnungen von wenigstens mehreren Brennkammern (14; 114) mit einer gemeinsamen Gasdiffusionskammer (18; 118) in Verbindung sind.

12. Gasgenerator nach Anspruch 11, **dadurch gekennzeichnet, daß** die Gasdiffusionskammer (18; 118) wenigstens eine Anordnung (19; 119) zum Filtern und Abkühlen von Gas umfaßt.
